Europäisches Patentamt

European Patent Office

Office européen des brevets

(11) Publication number: **0 201 603 B1**

(12) **EUROPEAN PATENT SPECIFICATION**

(45) Date of publication of patent specification: **02.01.91**

(51) Int. Cl.⁵: **G 11 B 7/09**

(21) Application number: **85904874.6**

(22) Date of filing: **03.10.85**

(86) International application number:
**PCT/JP85/00546**

(87) International publication number:
**WO 86/02479 24.04.86 Gazette 86/09**

(54) **SYSTEM FOR DETECTING TRACKING ERROR OF AN OPTICAL HEAD.**

(30) Priority: **15.10.84 JP 215860/84**

(43) Date of publication of application:
**20.11.86 Bulletin 86/47**

(45) Publication of the grant of the patent:
**02.01.91 Bulletin 91/01**

(84) Designated Contracting States:
**AT DE FR GB IT SE**

(56) References cited:
**US-A-4 037 252**

**PATENT ABSTRACTS OF JAPAN, vol. 8, no. 60 (P-262)1497r, 22nd March 1984; & JP-A-58 208 939 (AKAI DENKI K.K.) 05-12-1983**

**PATENT ABSTRACTS OF JAPAN, vol. 8, no. 31 (P-253)1468r, 9th February 1984; & JP-A-58 185 045 (SONY K.K.) 28-10-1983**

**PATENT ABSTRACTS OF JAPAN, vol. 8, no. 105 (P-274)1542r, 17th May 1984; & JP-A-59 14 148 (FUJITSU K.K.) 25-01-1984**

(73) Proprietor: **SONY CORPORATION**
**7-35 Kitashinagawa 6-Chome Shinagawa-ku Tokyo 141 (JP)**

(72) Inventor: **OHSATO, Kiyoshi Sony Corporation**
**7-35, Kitashinagawa 6-chome**
**Shinagawa-ku Tokyo 141 (JP)**

(74) Representative: **Thomas, Christopher Hugo et al**
**D Young & Co 10 Staple Inn**
**London WC1V 7RD (GB)**

(56) References cited:
**PATENT ABSTRACTS OF JAPAN, vol. 8, no. 163 (P-290)1600r, 27th July 1984; & JP-A-59 58 638 (NIPPON DENKI K.K.) 04-04-1984**

**PATENT ABSTRACTS OF JAPAN, vol. 9, no. 30 (P-333)1753r, 8th February 1985; & JP-A-59 172 171 (SONY K.K.) 28-09-1984**

**PATENT ABSTRACTS OF JAPAN, vol. 2, no. 23 (E-77), 15th February 1978, page 11753 E 77; & JP-A-52 145 006 (MITSUBISHI DENKI K.K.) 02-12-1977**

**Description**

This invention relates to optical tracking error detecting systems for deriving a tracking error signal in dependence on the position of light beam relative to an optical record medium.

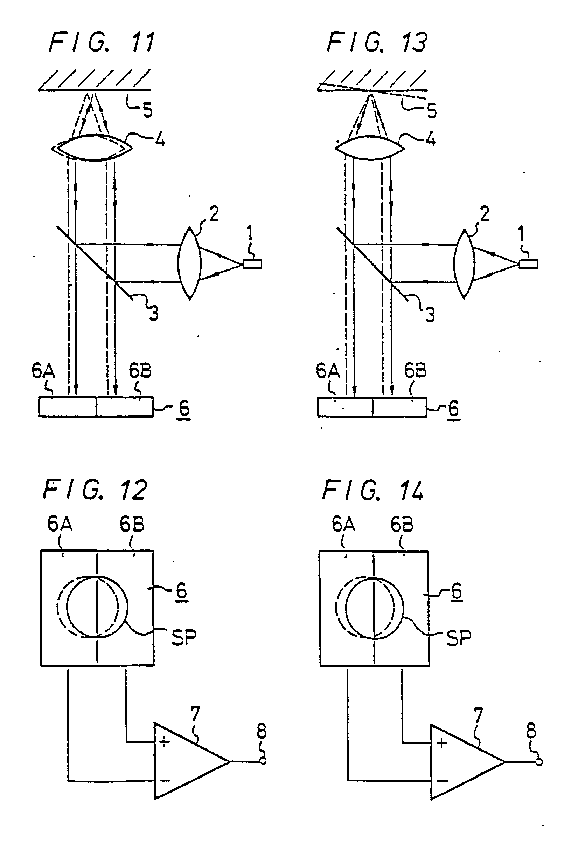

Referring to Figure 11, a previously proposed optical tracking error detecting system comprises a semiconductor laser element 1 (laser diode) used as a laser light source. When a diverging laser beam therefrom passes through a collimator lens 2, it is made into a parallel beam, which is deflected by 90° by a beam splitter 3 and falls on an objective lens 4. A converging beam from the objective lens 4 irradiates an optical disc 5 forming an optical record medium and is focused thereon. A beam reflected from the optical disc 5 enters the objective lens 4 in which it is collimated to a parallel beam, which passes through the beam splitter 3 to a two-part photo detector 6.

The two-part photo detector 6 is formed of two photo detection sections 6A and 6B as shown in Figure 12. When a circular spot SP formed by the parallel beam from the objective lens 4 is located symmetrically over the two photo detection sections 6A and 6B, the converged beam from the objective lens 4 is scanning the centre of the track on the optical disc 5. Accordingly, if both the detected outputs from these two photo detection sections 6A and 6B are supplied to a differential amplifier 7, and thereby a difference therebetween is calculated, a tracking error signal is developed at an output terminal 8.

In this system, however, as shown by a broken line in Figure 11, if the objective lens 4 is moved parallel to the optical disc 5, since the two-part photo detector 6 is fixed, the position of the spot SP focused thereon is displaced as shown by a broken line in Figure 12, producing a fluctuating DC component in the tracking error signal from the output terminal 8.

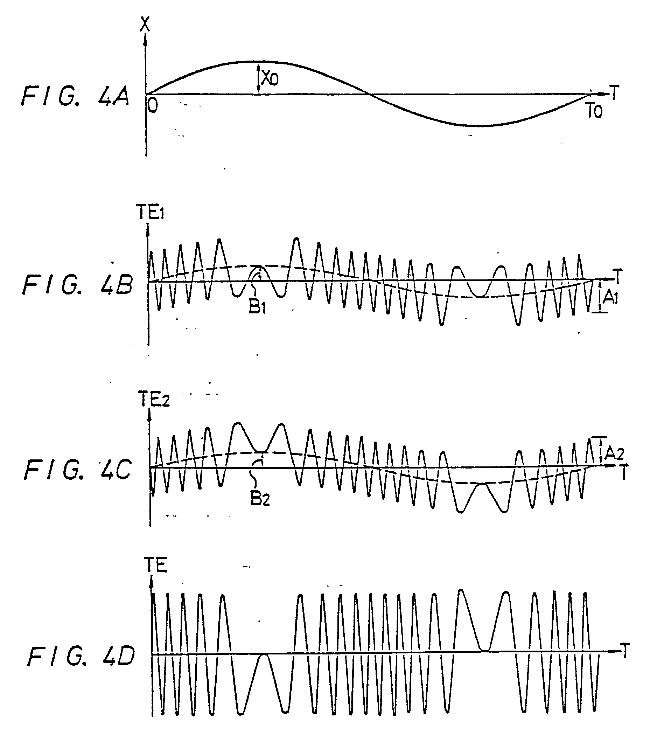

Moreover, if a radial skew of the optical disc 5 occurs as shown by a broken line in Figure 13, since the two-part photo detector 6 is fixed, the position of the spot SP focused thereon is displaced as shown by a broken line in Figure 14, producing a fluctuating DC component in the tracking error signal from the output terminal 8. Accordingly, in this case also, the DC component of the tracking error signal fluctuates as shown in Figure 4B.

Japanese patent specification JP—A—58/208939 discloses another optical tracking error detecting system of this general kind, in which a tracking error signal free of the effect of disc inclination is derived using one converging beam and one parallel beam incident on the disc, and two split sensors.

According to the present invention there is provided a tracking error detection system for deriving a tracking error signal in dependence on the position of a light beam relative to an optical record medium; characterized in that:

a pair of light beams are irradiated through an objective lens onto the record medium to form beam spots thereon spaced by a distance substantially equal to an odd multiple of half the pitch of recording tracks on the record medium;

a pair of beams reflected from said record medium fall on a pair of two-part photo detection elements; and

a tracking error signal is derived from the difference between difference outputs of both of said pair of two-part photo detection elements.

The invention will now be described by way of example with reference to the accompanying drawings, throughout which like parts are referred to by like references, and in which:

Figure 1 shows diagrammatically a first embodiment of system according to the invention;
Figure 2 is a circuit diagram thereof;
Figure 3 shows a positional relationship between an optical disc and a beam spot thereon;
Figure 4 is a waveform diagram;
Figure 5 shows diagrammatically a second embodiment of system according to the invention;
Figure 6 shows a two-part photo detector thereof and a beam spot thereon;
Figure 7 shows a positional relationship between an optical disc and a beam spot thereon;
Figure 8 is a circuit diagram of a modification of the embodiment of Figure 5;
Figure 9 shows a positional relationship between an optical disc thereof and a beam spot thereon;
Figure 10 is a graph showing the characteristics thereof;
Figures 11 and 12 show the arrangement of a previously proposed system and the circuit arrangement thereof; and
Figures 13 and 14 are a location representation and a circuit diagram respectively corresponding to Figures 11 and 12.

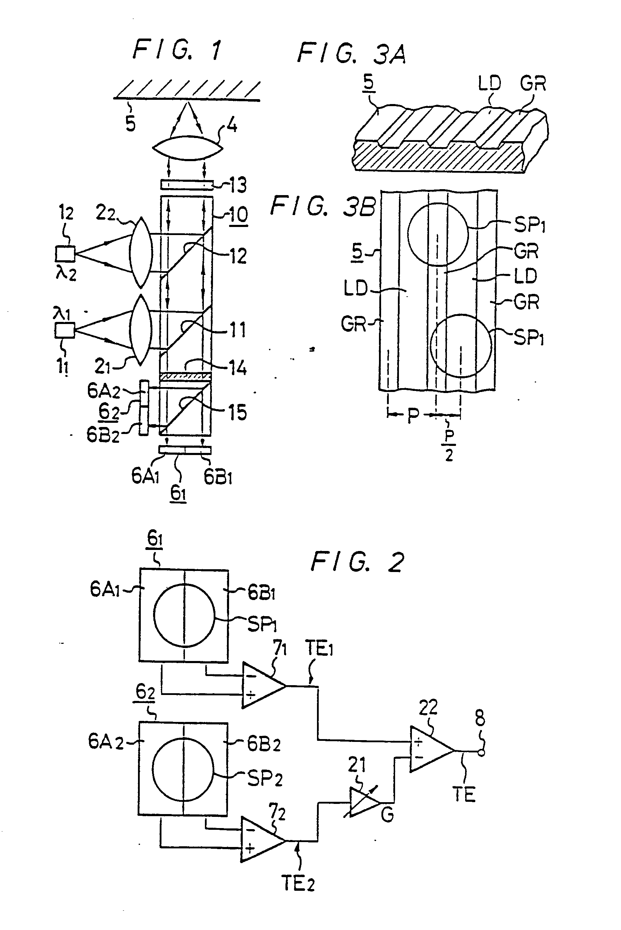

Referring to Figure 1, in the first embodiment semiconductor laser elements $1_1$ and $1_2$ (laser diodes) emit light of different wavelengths $\lambda_1$ and $\lambda_2$. Diverging laser beams therefrom fall on respective collimator lens $2_1$ and $2_2$, and are collimated as parallel beams.

An optical element 10 comprises a dichroic mirror 15, a 1/2 wave plate 14, a polarizing beam splitter 11 and a dichroic mirror 12 formed as one component is this order from the bottom to the top in the figure.

The parallel beam from the collimator lens $2_2$ is deflected by 90° by the dichroic mirror 12 and passes through a 1/4 wave plate 13 to an objective lens 4. The converging beam therefrom is made incident on an optical disc 5. Moreover, the parallel beam from the collimator lens $2_1$ is deflected by 90° by the polarizing beam splitter 11 and passes through the dichroic mirror 12 and the 1/4 length plate 13 to the objective lens 4. The converging beam therefrom is also made incident on the optical disc 5.

The beam reflected from the optical disc 5 passes through the objective lens 4 and is thereby made a parallel beam which passes through the 1/4 wave plate 13, the dichroic mirror 12 and the polarizing beam splitter 11 to the 1/2 wave plate 14. Of the beams from the 1/2 wave plate 14, the beam having the wavelength $\lambda_1$ passes through the dichroic mirror 15 to one two-part photo detector $6_1$, while the beam having the wavelength $\lambda_2$ is deflected by 90° by the dichroic mirror 15 and passes to another two-part photo detector $6_2$.

The positional relationship of the beams falling on the optical disc 5 will now be described with reference to Figure 3. The optical disc 5 in this case, includes pre-grooves GR of a spiral shape and pitch P on which an information signal is to be recorded, and a land portion LD therebetween as shown in Figure 3A. A recording track is formed on the pre-groove GR. When the semiconductor laser elements $1_1$ and $1_2$ are positioned, the spacing between the spot $SP_1$ of the beam having the wavelength $\lambda_1$ and the spot $SP_2$ of the beam having the wavelength $\lambda_2$, each of which is derived from the objective lens 4, is set as just half the track pitch P.

With the arrangement of Figure 1, the two-part photo detector $6_1$ and $6_2$ can be located with ease and they do not need to be positioned with high accuracy.

The circuit of this embodiment will now be described with reference to Figure 2. Both detected outputs from the two photo detecting sections $6A_1$ and $6B_1$ of one two-part photo detector $6_1$ are supplied to a differential amplifier $7_1$, from which a difference output $TE_1$ is derived. Both detected outputs of the two photo detectors $6A_2$ and $6B_2$ of the other two-part photo detector $6_2$ are supplied to a differential amplifier $7_2$, from which a difference output $TE_2$ is derived. The difference output $TE_1$ from the differential amplifier $7_1$ is supplied to another differential amplifier 22. The output $TE_2$ from the differential amplifier $7_2$ is supplied through a variable gain amplifier 21 (the gain of which is taken as G) to the differential amplifier 22, and a difference output TE therefrom is supplied to the output terminal 8 as the tracking error signal.

Referring to Figure 4, the fact that the tracking error signal obtained from the differential amplifier 22 contains substantially no DC fluctuations will be explained:

First, a moving position X (see Figure 4A) of the objective lens 4 is expressed by the following equation:

$$X = X_0 \sin (2\pi T/T_0)$$

where $X_0$ is the amplitude, T is the time, and $T_0$ is the period.

Accordingly, the difference output $TE_1$ (see Figure 4B) of the differential amplifier $7_1$ is expressed by the following equation:

$$TE_1 = A_1 \sin (2\pi X/P) + B_1 \sin (2\pi T/T_0)$$

where $A_1$ is the amplitude of the traverse signal component and $B_1$ is the amplitude of the fluctuating DC component.

Further, the difference output $TE_2$ (see Figure 4C) of the differential amplifier $7_2$ is expressed by the following equation:

$$TE_2 = A_2 \sin \{2\pi(X+P/2)/P\} + B_2 \sin (2\pi T/T_0) = -A_2 \sin (2\pi X/P) + B_2 \sin (2\pi T/T_0)$$

The gain G of the variable gain amplifier 21 is set at $B_1/B_2$. Accordingly, the difference output TE (see Figure 4D) of the differential amplifier 22 is expressed by the following equation:

$$TE = TE_1 - (B_1/B_2)TE_2 = \{A_1 + (B_1/B_2)A_2\} \cdot \sin (2\pi X/P)$$

From this equation, it is understood that the tracking error signal developed at the output terminal 8 in Figure 2 does not contain a fluctuating DC component.

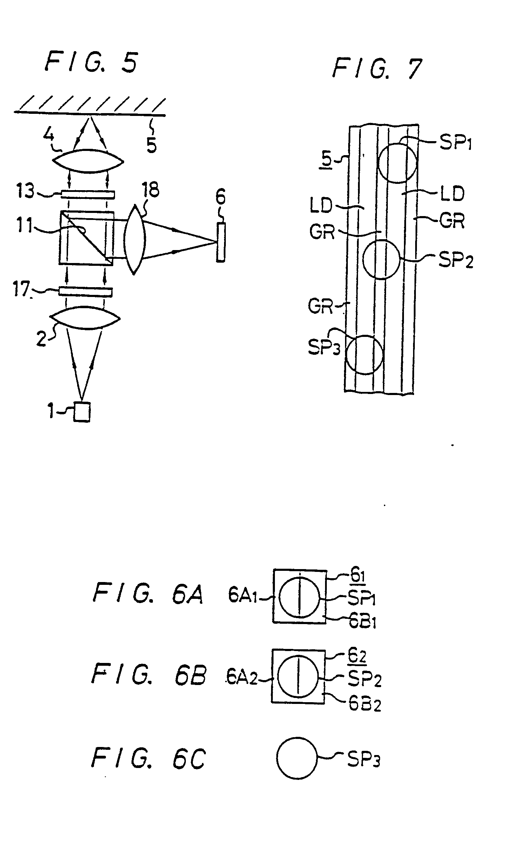

The second embodiment of the invention will now be described with reference to Figure 5. The diverging laser beam from the semiconductor laser element 1 is passed to the collimator lens 2 and thereby collimated into a parallel beam which enters a diffraction grating 17 and is thereby separated into a 0-order beam, a +1st-order beam and a −1st-order beam. These beams pass through the polarizing beam splitter 11 and a 1/4 wave plate 13 to the objective lens 4, and the converging beam therefrom falls on the optical disc 5. The reflected beam from the optical disc 5 is introduced into the objective lens 4, and is thereby made a parallel beam which is passed through the 1/4 wave plate 13 to the polarizing beam splitter 11 in which it is deflected by 90°, converged by a converging lens 18 and then falls on the two-part photo detector 6. The two-part photo detector 6 is formed of two-divided photo detectors $6_1$ and $6_2$, as shown in Figure 6.

On the optical disc 5, there are formed spots $SP_2$, $SP_1$ and $SP_3$ corresponding to the 0-order, +1st-order and −1st-order beams as shown in Figure 7, respectively. By rotating the diffraction grating 17, the distance between the spots $SP_1$ and $SP_2$ is set to half the track pitch P, and these spots are detected by the two-part photo detectors $6_1$ and $6_2$. The spot $SP_3$ is not used for tracking error detection, but for writing or reading of the data.

The arrangement of the electrical system is the same as Figure 2.

With the second embodiment, only the single semiconductor laser element is required, and both the two-part photo detectors are arranged on the same plane, so that the tolerance in the position of the spot relative to movement of the two-part photodetectors becomes large.

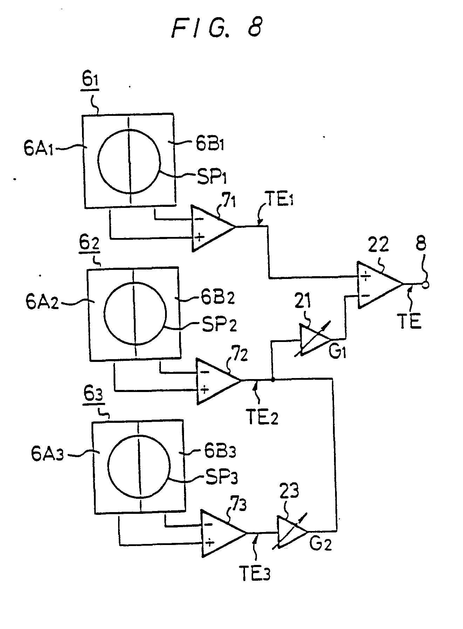

In this second embodiment, if the distance between the spots on the optical disc is not exactly half the track pitch, the DC fluctuation of the tracking error signal cannot be completely removed. Figure 8 shows a modified embodiment in which the DC component can be positively removed without setting the distance between the spots on the optical disc 5 to exactly half the track pitch P.

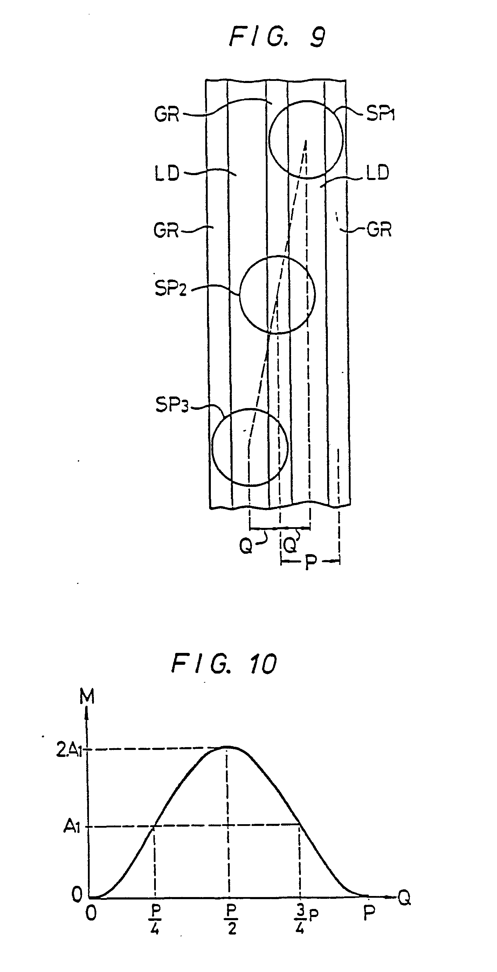

That is, while in the embodiment in Figure 5 the spots $SP_2$, $SP_1$ and $SP_3$ corresponding to the 0-order, +1st-order and −1st-order beams are formed on the optical disc 5 as shown in Figures 7 and 9, the distance between the spots $SP_1$, $SP_2$ and $SP_3$ are in this case set as Q, which is approximately equal to half the track pitch P, and these spots are detected by two-part photo detectors $6_1$, $6_2$ and $6_3$.

Both detected outputs from the two-part photo detection sections $6A_1$ and $6B_1$ of the first two-part photo detector $6_1$ are supplied to the differential amplifier $7_1$, from which the difference output $TE_1$ is derived. Both detected outputs from the two-part photo detection sections $6A_2$ and $66_2$ of the second two-part photo detector $6_2$ are supplied to the differential amplifier $7_2$ from which a difference output $TE_2$ is derived. Both detected outputs from the two-part photo detection sections $6A_3$ and $6B_3$ of the third two-part photo detection sections $6A_3$ and $6B_3$ of the third two-part photo detector $6_3$ are supplied to a differential amplifier $7_3$ from which a difference output TE3 is derived. The difference output $TE_1$ from the differential amplifier $7_1$ is supplied to the other differential amplifier 22. The output $TE_2$ from the differential amplifier $7_2$ and an output, which is derived from the differential amplifier $7_1$ and passed through a variable gain amplifier 23 (of gain $G_2$), are added together. The added output is supplied through the variable gain amplifier 21 (of gain $G_1$) to the differential amplifier 22. Then, the difference output TE from the differential amplifier 22 is supplied to the output terminal 8 as the tracking error signal.

The fact that the tracking error signal obtained from the differential amplifier 22 contains no DC fluctuation will now be explained.

The difference output $TE_1$ of the differential amplifier $7_1$ is expressed by the following equation:

$$TE_1 = A_1 \sin (2\pi X/P) + B_1 \sin (2\pi T/T_0)$$

Further, the difference output $TE_2$ of the differential amplifier $7_2$ is expressed by the following equation:

$$TE_2 = A_2 \sin \{2\pi(X+Q)/P\} + B_2 \sin (2\pi T/T_0)$$

Also, the difference output $TE_3$ of the differential amplifier $7_3$ is expressed by the following equation:

$$TE_3 = A_3 \sin \{2\pi(X-Q)/P\} + B_3 \sin (2\pi T/T_0)$$

Since the modulation degrees and the DC fluctuations of the three spots $SP_1$, $SP_2$ and $SP_3$ are equal, the following equation is established:

$$B_1/A_1 = B_2/A_2 = B_3/A_3$$

Further, if the gains of the variable gain amplifiers 21 and 23 are respectively selected as:

$$A_1/2A_2 \text{ and } A_2/A_3$$

the tracking error signal TE from the differential amplifier 22 is expressed by the following equation:

$$TE = TE_1 - (A_1/2A_2)\{TE_2 + (A_2/A_3)TE_3\} = A_1\{1 - \cos (2\pi Q/P)\} \cdot \sin (2\pi X/P)$$

As will be clear from this equation, it can be understood that regardless of Q, the tracking error signal TE does not contain a DC fluctuation. However, although the modulation degree M expressed as:

$$M = A_1\{1 - \cos (2\pi Q/P)\}$$

is changed as the value of Q as shown in Figure 10, it becomes a maximum when Q=P/2, while it becomes a minimum (zero) when Q=0 and Q=P.

Thus it is possible to form a tracking error detecting system which can remove DC fluctuations in the tracking error signal caused by lateral movement of the objective lens and radial skew of the optical record medium. The same effect is achieved if the beam spots are displaced by an odd multiple of half the track pitch.

**Claims**

1. A tracking error detection system for deriving a tracking error signal in dependence on the position of a light beam relative to an optical record medium (5); characterized in that:

4

a pair of light beams are irradiated through an objective lens (4) onto the record medium (5) to form beam spots thereon spaced by a distance substantially equal to an odd multiple of half the pitch of recording tracks (GR) on the record medium (5);

a pair of beams reflected from said record medium (5) fall on a pair of two-part photo detection elements ($6_1$, $6_2$); and

a tracking error signal (TE) is derived from the difference between difference outputs ($TE_1$, $TE_2$) of both of said pair of two-part photo detection elements ($6_1$, $6_2$).

2. A system according to claim 1 wherein said pair of beams are obtained when a beam emitted from a single semiconductor laser element (1) is passed through a diffraction grating (17).

3. A system according to claim 1 wherein said pair of two-part photo detection elements ($6_1$, $6_2$) are located in the same plane.

**Patentansprüche**

1. Spurfehler-Detektorsystem zur Ableitung eines Spurfehlersignal in Abhängigkeit von der Position eines Lichtstrahls relativ zu einem optischen Aufzeichnungsmedium (5), dadurch gekennzeichnet,

daß zwei Lichtstrahlen durch die Objektiv (4) auf dem Aufzeichnungsmedium (5) abgebildet werden, um auf diesem Strahlpunkte zu bilden, die einen Abstand voneinander haben, der im wesentlichen einem ungeradzahligen Vielfachen des halben Abstands von Aufzeichnungsspuren (GR) auf dem Aufzeichnungsmedium (5) entspricht,

daß zwei von dem Aufzeichnungsmedium (5) reflektierte Strahlen auf zwei zweiteilige Photodetektorelemente ($6_1$, $6_2$) gerichtet werden,

und daß aus der Differenz zwischen den Differenzausgangssignalen ($TE_1$, $TE_2$) der beiden zweiteiligen Photodetektorelemente ($6_1$, $6_2$) ein Spurfehlersignal (TE) gewonnen wird.

2. System nach Anspruch 1, bei dem die beiden Strahlen gewonnen werden, indem ein von einem einzigen Halbleiter-Laserelemente (1) emittierter Strahl durch ein Beugungsgitter (17) geleitet wird.

3. System nach Anspruch 1, bei dem die beiden zweiteiligen Photodetektorelemente ($6_1$, $6_2$) in derselben Ebene angeordnet sind.

**Revendications**

1. Système détection d'erreur de suivi de piste pour obtenir un signal d'erreur de suivi de piste en fonction de la position d'un faisceau lumineux par rapport à un support d'enregistrement optique (5); caractérisé

par le fait qu'une paire de faisceaux lumineux éclairent le support d'enregistrement (5), en passant par une lentille objectif (4), pour y former des spots de faisceau espacés d'une distance substantiellement égale à un multiple impair du demi pas des pistes d'enregistrement (GR) sur le support d'enregistrement (5);

par le fait qu'une paire de faisceaux réfléchis par ledit support d'enregistrement (5) tombent sur une paire d'éléments de photo-détection en deux parties ($6_1$, $6_2$); et

par le fait que l'on fait dériver un signal d'erreur de suivi de piste (TE) de la différence entre les signaux de sortie ($TE_1$, $TE_2$) indicatifs d'une différence, de l'un et l'autre de ladite paire d'éléments de photodétection en deux parties ($6_1$, $6_2$).

2. Système selon la revendication 1 dans lequel on obtient ladite paire de faisceaux en faisant passer à travers un réseau de diffraction (17) un faisceau émis à partir d'un unique élément (1) formant laser à semiconducteur.

3. Système selon la revendication 1 dans lequel ladite paire d'éléments ($6_1$, $6_2$) de photodétection en deux parties sont situés dans le même plan.

FIG. 1

FIG. 3A

FIG. 3B

FIG. 2

FIG. 4A

FIG. 4B

FIG. 4C

FIG. 4D

FIG. 5

FIG. 7

FIG. 6A

FIG. 6B

FIG. 6C

3

*FIG. 8*

## F I G. 9

## F I G. 10

5

*FIG. 11*

*FIG. 13*

6A 6B

6A 6B

*FIG. 12*

6A 6B

*FIG. 14*

6A 6B

6